# EUROPEAN PATENT SPECIFICATION

(11) **EP 3 395 631 B1**
(45) Date of publication and mention of the grant of the patent: **08.01.2020**
(21) Application number: 16815941.6
(22) Date of filing: 30.11.2016
(51) Int. Cl.: B60T 8/17, B60T 8/26, B60T 8/32

(54) **CONTROLLER AND CONTROL METHOD**
STEUERGERÄT UND STEUERUNGSVERFAHREN
DISPOSITIF DE COMMANDE ET PROCÉDÉ DE COMMANDE

(30) Priority: 22.12.2015 JP 2015250580
(43) Date of publication of application: 31.10.2018
(73) Proprietor: Robert Bosch GmbH, 70442 Stuttgart (DE)
(72) Inventor: NEMOTO, Nobuho, Yokohama-shi Kanagawa 2248501 (JP)
(86) International application number: PCT/IB2016/057198
(87) International publication number: WO 2017/109613

(56) References cited:
- DE-A1-102008 007 714
- DE-A1-102008 026 530
- DE-A1-102008 026 531
- DE-A1-102008 045 970
- US-A1- 2010 017 085

## Description

### Technical Field

The invention relates to a controller for a motorcycle and a control method of the same.

### Background Art

As a controller for a vehicle, a controller that executes hill-hold control for retaining a brake force of a brake mechanism even when an occupant of the vehicle releases a brake pedal or the like has been available (for example, see PTL 1) . The brake force that has been retained by the hill-hold control is reduced when a certain condition is satisfied.

### Citation List

### Patent Literature

PTL1: JP-A-2007-246051
US 2010/017085 discloses an electronic brake system and a method for regulating the brake pressure in an electronically-controlled brake system of a motorcycle. The method includes the step of actively building a brake pressure in a wheel brake circuit to prevent a motorcycle from moving. The method further includes the step of maintaining the brake pressure in the wheel brake circuit once (i) the motorcycle comes to a standstill or is at a standstill or is approximately at a standstill, and (ii) an activation condition is fulfilled.

### Disclosure of Invention

### Technical Problem

In regard to the conventional controller, depending on a condition of a road surface and the like, there is a case where a vehicle body starts moving and a posture of the vehicle body thereby becomes unstable in a process of reducing the brake force, which has been retained by the hill-hold control. In particular, a vehicle body of a motorcycle is more likely to become unstable than that of a four-wheeled vehicle or the like .

The invention has been made with a problem as described above as the background and therefore has a purpose of providing a controller and a control method capable of suppressing a posture of a motorcycle from becoming unstable in a process of reducing a brake force that has been retained by hill-hold control.

### Solution to Problem

A controller according to the invention is a controller for controlling a brake mechanism that generates a brake force on a motorcycle, and includes: a detection section for detecting movement of the motorcycle; and a control section for executing hill-hold control that retains the brake force on an inclined road surface. In the cases where the brake force, which has been retained by the hill-hold control, starts to be reduced and it is then determined on the basis of a detection signal of the detection section that the motorcycle starts moving, the control section reduces a reduction amount of the brake force per time to make it smaller than the reduction amount of the brake force per time prior to the determination that the motorcycle starts moving.

A control method according to the invention is a control method of a motorcycle for executing hill-hold control that retains a brake force of a brake mechanism on an inclined road surface, and includes the steps of: starting to reduce the brake force, which has been retained by the hill-hold control; determining whether the motorcycle starts moving after the brake force starts to be reduced; and, in the case where it is determined that the motorcycle starts moving, reducing a reduction amount of the brake force per time to make it smaller than the reduction amount of the brake force per time prior to the determination that the motorcycle starts moving.

### Advantageous Effects of the Invention

In the controller and the control method according to the invention, in the case where it is determined that the motorcycle starts moving, the reduction amount of the brake force per time is reduced to be smaller than the reduction amount of the brake force per time prior to the determination that the motorcycle starts moving. Therefore, the movement of the motorcycle can be made gentle, and a posture of the motorcycle can be suppressed from becoming unstable.

### Brief Description of Drawings

Fig. 1 is a view that schematically depicts a motorcycle including a controller according to a first embodiment of the invention.
Fig. 2 is a schematic configuration diagram of a hydraulic pressure control system that includes the controller according to the first embodiment of the invention.
Fig. 3 is a functional block diagram of various sensors, a control section, and various actuators provided in the hydraulic pressure control system that includes the controller according to the first embodiment of the invention.
Fig. 4 is a functional block diagram of a control section of the controller according to the first embodiment of the invention.
Fig. 5 is a chart that indicates timing of each of various operations in hill-hold control by the controller according to the first embodiment of the invention.
Fig. 6 is an explanatory chart of a brake force of the motorcycle that includes the controller according to the first embodiment of the invention.
Fig. 7 is one example of a control flow of the controller according to the first embodiment of the invention.
Fig. 8 is a view that schematically depicts the motorcycle that is stopped on an uphill road surface.
Fig. 9 is one example of a control flow of a controller according to a modified example of the first embodiment of the invention.
Fig. 10 is a functional block diagram of various sensors, a control section, and various actuators provided in a hydraulic pressure control system that includes a controller according to a second embodiment of the invention.
Fig. 11 is one example of a control flow of the controller according to the second embodiment of the invention.
Fig. 12 is one example of a control flow of a controller according to a modified example of the second embodiment of the invention.

### Description of Embodiments

A description will hereinafter be made on a controller and a control method according to the invention by using the drawings. Each of a configuration, an operation, and the like, which will be described below, is merely one example, and each of the controller and the control method according to the invention is not limited to a case with such a configuration, such an operation, and the like. For example, the controller and the control method according to the invention may perform an operation other than brake control.

In addition, in each of the drawings, detailed portions are depicted in an appropriately simplified manner or are not depicted. Furthermore, overlapping descriptions are appropriately simplified or are not made.

### First Embodiment

### <Overall configuration of hydraulic pressure control system 100>

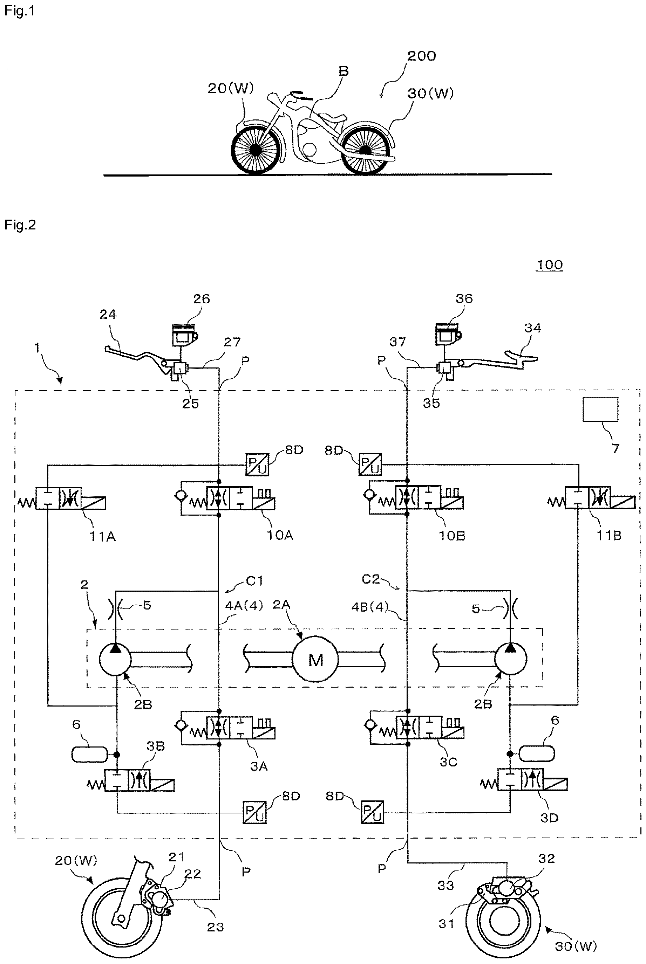

Fig. 1 is a view that schematically depicts a motorcycle including a controller according to this first embodiment. Fig. 2 is a schematic configuration diagram of a hydraulic pressure control system that includes the controller according to this first embodiment.

A hydraulic pressure control system 100 is mounted in a motorcycle 200 and includes a controller 1 that generates a brake force on a wheel W (a front wheel 20 and a rear wheel 30) .

The motorcycle 200 is formed by combining the wheel W, a vehicle body B, and the controller 1. The vehicle body B includes all components of the motorcycle 200 except for the controller 1 and the wheel W. In addition, the motorcycle 200 will be described as a two-wheeled vehicle in this embodiment. However, the motorcycle 200 is not limited thereto and may be a three-wheeled vehicle.

The motorcycle 200 includes the front wheel 20 and the rear wheel 30 as well as a handlebar lever 24 and a foot pedal 34 that are operated by an occupant. When this handlebar lever 24 is operated, the brake force on the front wheel 20 is changed. When the foot pedal 34 is operated, the brake force on the rear wheel 30 is changed.

The hydraulic pressure control system 100 includes: a front-wheel hydraulic circuit C1 through which a brake fluid used to generate the brake force on the front wheel 20 flows; and a rear-wheel hydraulic circuit C2 through which a brake fluid used to generate the brake force on the rear wheel 30 flows.

The hydraulic pressure control system 100 includes: a front brake pad 21 that is attached to the front wheel 20; a front wheel cylinder 22 in which a front brake piston (not depicted) for causing movement of the front brake pad 21 is provided in a freely slidable manner; and a brake fluid pipe 23 that is connected to the front wheel cylinder 22.

The hydraulic pressure control system 100 includes: a first master cylinder 25 that is attached to the handlebar lever 24; a first reservoir 26 that stores the brake fluid; and a brake fluid pipe 27 that is connected to the first master cylinder 25. Note that a master cylinder piston (not depicted) is provided in a freely slidable manner in the first master cylinder 25. When the handlebar lever 24 is operated, the master cylinder piston in the first master cylinder 25 moves.

The hydraulic pressure control system 100 includes: a rear brake pad 31 that is attached to the rear wheel 30; a rear wheel cylinder 32 in which a rear brake piston (not depicted) for causing movement of the rear brake pad 31 is provided in a freely slidable manner; and a brake fluid pipe 33 that is connected to the rear wheel cylinder 32.

The hydraulic pressure control system 100 includes: a second master cylinder 35 that is attached to the foot pedal 34; a second reservoir 36 that stores the brake fluid; and a brake fluid pipe 37 that is connected to the second master cylinder 35. Note that a master cylinder piston (not depicted) is provided in a freely slidable manner in the second master cylinder 35. When the foot pedal 34 is operated, the master cylinder piston in the second master cylinder 35 moves.

### <Description on configuration of controller 1>

The controller 1 includes: an internal channel 4 through which the brake fluid flows; and a pump device 2 that is used to feed the brake fluid in the internal channel 4 to the first master cylinder 25 side and the second master cylinder 35 side. Note that the internal channel 4 includes: an internal channel 4A that constitutes a part of the front-wheel hydraulic circuit C1; and an internal channel 4B that constitutes a part of the rear-wheel hydraulic circuit C2.

In addition, the controller 1 includes a freely openable/closable regulating valve 3. Note that the regulating valve 3 includes a first pressure boosting valve 3A, a first pressure reducing valve 3B, a second pressure boosting valve 3C, and a second pressure reducing valve 3D. The regulating valve 3 is, for example, a valve that is opened or closed when brake control such as control of an antilock brake system (an ABS) is executed.

Furthermore, the controller 1 includes a switching valve 10, an opening degree of which can freely be adjusted, and freely openable/closable inlet valve 11. The switching valve 10 includes: a switching valve 10A that is provided in the front-wheel hydraulic circuit C1; and a switching valve 10B that is provided in the rear-wheel hydraulic circuit C2. When the switching valve 10A is closed, a hydraulic pressure of the brake fluid in the front wheel cylinder 22 is retained, and retention of the brake force on the front wheel 20 is thereby realized. In addition, when the switching valve 10B is closed, a hydraulic pressure of the brake fluid in the rear wheel cylinder 32 is retained, and retention of the brake force on the rear wheel 30 is thereby realized.

The inlet valve 11 includes: an inlet valve 11A that is provided in the front-wheel hydraulic circuit C1; and an inlet valve 11B that is provided in the rear-wheel hydraulic circuit C2. The inlet valve 11A is opened when the pressure of the front wheel cylinder 22 is boosted. The inlet valve 11B is opened when the pressure of the rear wheel cylinder 32 is boosted. Note that each of the regulating valve 3, the switching valve 10, and the inlet valve 11 is an electromagnetic valve that includes a solenoid, for example.

The controller 1 includes a control section 7 that controls opening/closing and the like of the regulating valve 3, the switching valve 10, and the inlet valve 11. Note that a part or a whole of the control section 7 may be constructed of a microcomputer, a microprocessor unit, or the like, may be constructed of a member in which firmware and the like can be updated, or may be a program module or the like that is executed by a command from a CPU or the like, for example.

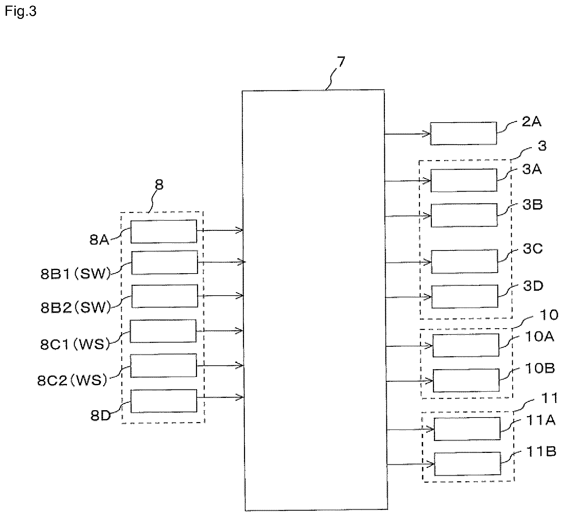

The controller 1 includes a detection mechanism 8 that outputs detection signals to the control section 7. The detection mechanism 8 includes: a switch 8A (see Fig. 3) that outputs an on/off signal to the control section 7; a position detection sensor 8B1 (see Fig. 3) that is used to detect an operation state of the handlebar lever 24; a position detection sensor 8B2 (see Fig. 3) that is used to detect an operation state of the foot pedal 34; a detection section 8C1 (see Fig. 3) and a detection section 8C2 (see Fig. 3) that are used to detect initiation of movement of the motorcycle 200; and a pressure sensor 8D that detects a hydraulic pressure of the brake fluid in the internal channel 4. Note that the detection section 8C1 is a front-wheel speed sensor and the detection section 8C2 is a rear-wheel speed sensor. In addition, the switch 8A is attached to the vehicle body of the motorcycle 200, for example. The occupant turns the switch 8A on when permitting execution of hill-hold control.

The controller 1 includes various ports P that are connected to corresponding fluid pipes such as the brake fluid pipe 23. In addition, the controller 1 includes: a float restrictor 5 that restricts a flow rate of the brake fluid flowing through the internal channel 4; and an accumulator 6 that can store the brake fluid.

The switching valve 10A, the inlet valve 11A, the first pressure boosting valve 3A, the first pressure reducing valve 3B, and the like are provided in the internal channel 4A. The internal channel 4A is connected to the brake fluid pipe 23 and the brake fluid pipe 27 via the ports P. The switching valve 10B, the inlet valve 11B, the second pressure boosting valve 3C, the second pressure reducing valve 3D, and the like are provided in the internal channel 4B. The internal channel 4B is connected to the brake fluid pipe 33 and the brake fluid pipe 37 via the ports P.

The pump device 2 includes: a drive mechanism 2A that can be constructed of a DC motor and the like, for example; and two pump elements 2B, to each of which drive power is provided by the drive mechanism 2A. The drive mechanism 2A includes a stator, a rotor, and the like, and a rotational frequency thereof is controlled by the control section 7. One of the pump elements 2B is used to feed the brake fluid in the front-wheel hydraulic circuit C1 and is provided in the internal channel 4A. The other of the pump elements 2B is used to feed the brake fluid in the rear-wheel hydraulic circuit C2 and is provided in the internal channel 4B.

The control section 7 executes the hill-hold control under a certain condition. In the hill-hold control, the brake force of the motorcycle 200 is retained in the case where the occupant of the motorcycle 200 releases the handlebar lever 24 and the foot pedal 34 in a state where the motorcycle 200 is stopped on an inclined road surface. After a lapse of a certain time, the control section 7 cancels retention of the brake force and reduces the brake force.

### <Configuration example of control section 7>

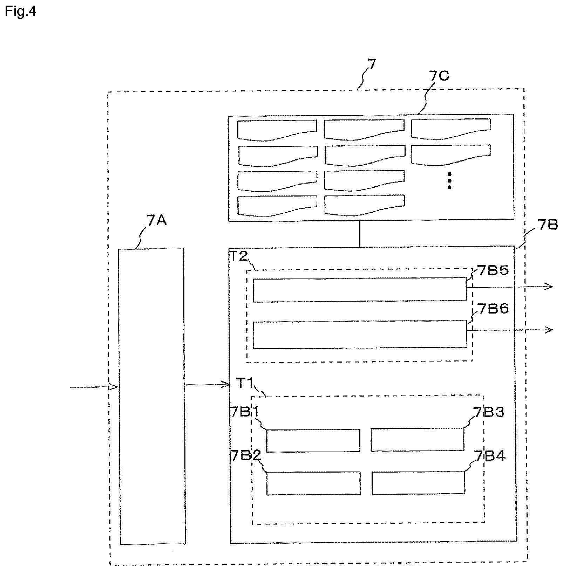

FIG. 3 is a functional block diagram of the various sensors, the control section, and various actuators provided in the hydraulic pressure control system that includes the controller according to this first embodiment. Fig. 4 is a functional block diagram of the control section of the controller according to this first embodiment. A description will be made on a configuration example of the control section 7 with reference to Fig. 3 and Fig. 4.

Note that the first pressure boosting valve 3A and the second pressure boosting valve 3C are opened and the first pressure reducing valve 3B and the second pressure reducing valve 3D are closed in the following description. The handlebar lever 24 and the foot pedal 34 are also collectively referred to as a brake operation section. The detection section 8C1 and the detection section 8C2 are also collectively referred to as a detection section WS. The position detection sensor 8B1 and the position detection sensor 8B2 are also collectively referred to as a position detection sensor SW. The pressures of the front wheel cylinder 22 and the rear wheel cylinder 32 are also collectively referred to as a cylinder pressure.

A brake mechanism means a configuration of generating the brake force on the motorcycle 200. For example, the switching valve 10, the inlet valve 11, the pump device 2, and the like correspond to the brake mechanism.

The control section 7 includes: an input section 7A that receives the signals from the detection mechanism 8; a processor section 7B that makes various determinations and the like; and a memory section 7C in which various types of data are stored.

### (Input section 7A)

The input section 7A is, for example, constructed of a circuit that includes an input circuit for receiving the signals from the detection mechanism 8, and the like. The signals received by the input section 7A are output to the processor section 7B.

### (Processor section 7B)

The processor section 7B includes an arithmetic section T1 and an actuator control section T2. The arithmetic section T1 includes a determination section 7B1, a decision section 7B2, a timer section 7B3, and a computation section 7B4. The processor section 7B can be constructed of a microcontroller and the like, for example.

The determination section 7B1 determines whether to execute the hill-hold control. Here, the hill-hold control includes a retention mode and a cancellation mode. The retention mode is a mode of retaining the brake force of the motorcycle 200. The cancellation mode is a mode of cancelling the retention of the brake force in the retention mode and reducing the brake force. Thus, timing at which the brake force, which has been retained by the hill-hold control, starts to be reduced is shift timing from the retention mode to the cancellation mode.

The determination section 7B1 determines whether the execution of the hill-hold control is permitted, determines whether the motorcycle 200 is stopped, and determines whether the brake operation section is released.

When determining that the execution of the hill-hold control is permitted, that the motorcycle 200 is stopped, and that the brake operation section is released, the determination section 7B1 determines to execute the retention mode of the hill-hold control.

Note that the on/off signal of the switch 8A is used to determine whether the execution of the hill-hold control is permitted. In addition, a wheel speed that is computed by the computation section 7B4 is used to determine whether the motorcycle 200 is stopped. Furthermore, a detection signal of the position detection sensor SW is used to determine whether the brake operation section is released.

Note that, when the brake operation section is released, pressures of the first master cylinder 25 and the second master cylinder 35 are reduced, for example. The pressures of the front wheel cylinder 22 and the rear wheel cylinder 32 are also reduced. For this reason, a pressure that is computed by the computation section 7B4 on the basis of a detection signal of the pressure sensor 8D can also be used to determine whether the brake operation section is released.

In addition, on the basis of a signal from the timer section 7B3, the determination section 7B1 determines whether the certain time has elapsed since initiation of the retention mode. When the certain time elapses, the control section 7 shifts from the retention mode to the cancellation mode. The certain time is set to approximately a few seconds, for example.

In the case where the cancellation mode is executed, the determination section 7B1 determines whether the motorcycle 200 starts moving on the basis of a detection signal of the detection section WS. More specifically, movement (rotation) of the wheels W is detected by the detection section WS, and the control section 7 determines whether the motorcycle 200 starts moving. Note that, because the wheel speed of the motorcycle 200 at the initiation of the movement is extremely low, it is assumed that the computation section 7B4 cannot compute the wheel speed. For this reason, the determination section 7B1 uses the detection signal of the detection section WS instead of that of the computation section 7B4.

When determining that the motorcycle 200 starts moving, the determination section 7B1 determines whether a prescribed time TM1 has elapsed on the basis of the signal from the timer section 7B3. These determinations are used to obtain timing for opening/closing the switching valve 10 when a reduction amount α per time, which will be described below, is set to a prescribed value α2.

In the case where the cancellation mode is executed, the determination section 7B1 determines whether the cylinder pressure that is computed by the computation section 7B4 is higher than a first prescribed pressure. The determination is made in consideration of a case where the brake force cannot be secured timely in the state where the cylinder pressure is lower than the first prescribed pressure and thus the posture of the motorcycle 200 cannot be stabilized.

In the case where the cancellation mode is executed, the determination section 7B1 determines whether the cylinder pressure, which is computed by the computation section 7B4, is lower than a second prescribed pressure. Note that the second prescribed pressure is lower than the first prescribed pressure. The determination is used to obtain timing for terminating the cancellation mode.

The decision section 7B2 decides parameters that are used during the execution of the cancellation mode.
(1) Initially, the decision section 7B2 decides the reduction amount α per time to a prescribed value α1. Here, the reduction amount α per time represents a magnitude of the brake force that is reduced per unit time.
(2) Next, the decision section 7B2 decides the reduction amount α of the brake force per time to the prescribed value α2, the reduction amount α of the brake force per time being used in the case where the determination section 7B1 determines that the motorcycle 200 starts moving. Here, the prescribed value α2 is smaller than the prescribed value α1. Note that the prescribed value α2 may be a negative value. That is, when the cancellation mode is executed, the prescribed value α2 can be decided so as to increase the brake force. On the other hand, the prescribed value α1 is a positive value so as to reduce the brake force.
(3) Next, the decision section 7B2 decides a time TM, in which the reduction amount α of the brake force per time is set to the prescribed value α2, to the prescribed time TM1.

In this first embodiment, the parameters, such as the prescribed value α1, that are used during the execution of the cancellation mode are decided in advance. Note that the parameters may appropriately be changed.

The timer section 7B3 counts a period from the initiation of the retention mode until the lapse of the certain time, a period from the time, at which the reduction amount α of the brake force per time is set to the prescribed value α2, until a lapse of the prescribed time period TM1, and the like, for example.

The computation section 7B4 computes the wheel speed on the basis of the detection signal of the detection section WS. The computation section 7B4 also computes the cylinder pressure on the basis of the detection signal of the pressure sensor 8D. In addition to the above, the computation section 7B4 can compute the pressures of the first master cylinder 25 and the second master cylinder 35 on the basis of the detection signal of the pressure sensor 8D.

The actuator control section T2 includes a drive mechanism control section 7B5 and a valve control section 7B6.

The valve control section 7B6 controls opening/closing operations of the regulating valve 3, the switching valve 10, and the inlet valve 11. When the determination section 7B1 determines to execute the hill-hold control, the valve control section 7B6 closes the switching valve 10 so as to retain the brake force of the motorcycle 200. In addition, when the determination section 7B1 determines that the certain time has elapsed from the initiation of the retention mode, the valve control section 7B6 opens/closes the switching valve 10 on the basis of a content of a decision of the decision section 7B2.

The drive mechanism control section 7B5 controls the rotational frequency of the drive mechanism 2A in correspondence with the opening/closing operation of the inlet valve 11. Note that, in the case where the prescribed value α2, use of which is decided by the decision section 7B2, is the negative value, the valve control section 7B6 opens the inlet valve 11 and closes the switching valve 10. Then, the drive mechanism control section 7B5 operates the drive mechanism 2A, so as to increase the cylinder pressure and increase the brake force.

### (Memory section 7C)

The memory section 7C stores data related to the detection signals of the detection mechanism 8, values of the parameters that are decided by the decision section 7B2, and the like. The memory section 7C can be constructed of a random access memory (a RAM) and the like, for example.

### <Brake force in retention mode and cancellation mode>

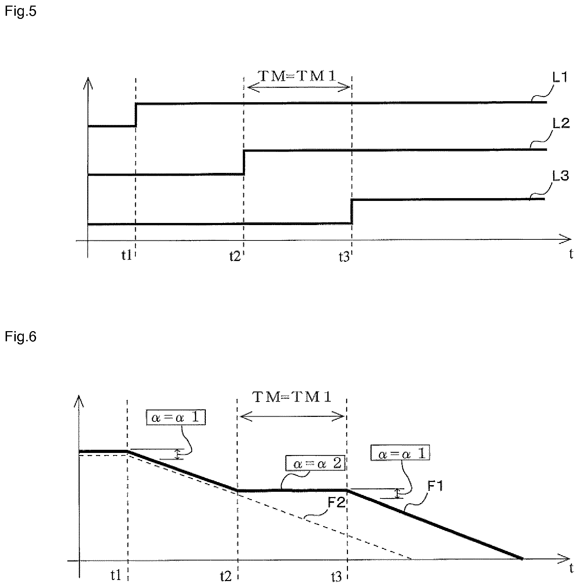

FIG. 5 is a chart that indicates timing of each of the various operations in the hill-hold control by the controller according to this first embodiment. Fig. 6 is an explanatory chart of the brake force of the motorcycle that includes the controller according to this first embodiment.

A line L1 in Fig. 5 indicates timing t1 at which the retention mode is shifted to the cancellation mode in the hill-hold control. The retention mode is executed in a period before the timing t1, and the cancellation mode is executed in a period after the timing t1.

A line L2 in Fig. 5 indicates timing t2 at which it is determined that the motorcycle 200 starts moving in the cancellation mode. In reality, the motorcycle 200 possibly starts moving at timing that is after the timing t1 and is before the timing t2. Thus, the timing t2 merely indicates the timing at which the determination section 7B1 determines that the motorcycle 200 starts moving in the cancellation mode.

A line L3 in Fig. 5 indicates timing at which the prescribed time TM1 elapses from the timing t2, at which it is determined that the motorcycle 200 starts moving.

A line F1 in Fig. 6 indicates a temporal change of the brake force in the hill-hold control by the controller 1. A line F2 in Fig. 6 indicates a temporal change of the brake force in the hill-hold control by the conventional controller. Note that each of the line F1 and the line F2 also corresponds to a temporal change of the cylinder pressure.

The control section 7 executes the retention mode in the period before the timing t1. Thus, the brake force is retained to be higher than that after the timing t1.

At the timing t1, the control section 7 shifts from the retention mode to the cancellation mode. The control section 7 controls the switching valve 10 such that the reduction amount α of the brake force per time becomes the prescribed value α1. For example, in the case where opening/closing times of the switching valve 10 each time is set to be constant, the control section 7 increases number of opening/closing of the switching valve 10 per time as the prescribed value α1 is increased. On the other hand, in the case where the opening/closing times of the switching valve 10 are set to be variable, the control section 7 extends the opening time of the switching valve 10 per time as the prescribed value α1 is increased.

At the timing t2, the control section 7 determines that the motorcycle 200 starts moving. Accordingly, the control section 7 controls the switching valve 10 such that the reduction amount α of the brake force per time becomes the prescribed value α2. In an example of Fig. 6, the prescribed value α2 is zero. Thus, the control section 7 closes the switching valve 10 during the prescribed time TM1.

At a timing t3, the control section 7 determines that the certain time has elapsed since the initiation of the retention mode. Accordingly, the control section 7 controls the switching valve 10 such that the reduction amount α of the brake force per time becomes the prescribed value α1 from the prescribed value α2.

### <Control flow example of first embodiment>

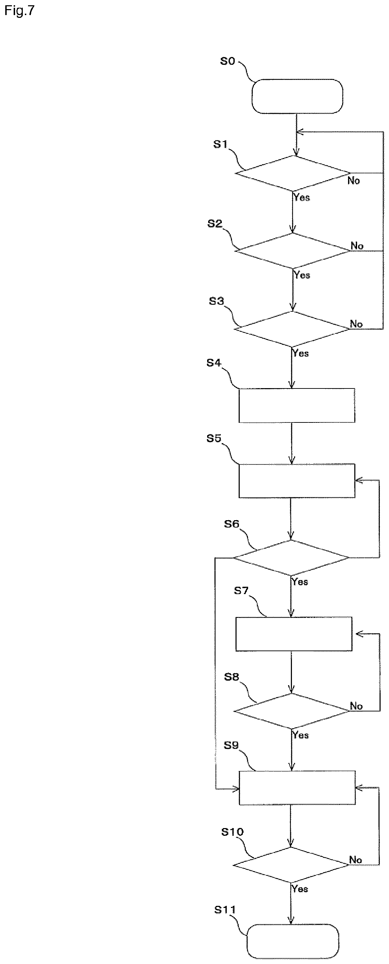

Fig. 7 is one example of a control flow of the controller according to this first embodiment. A description will be made on the hill-hold control that is executed by the control section 7 of the controller 1 with reference to Fig. 7.

### (Step S0: Start)

The control section 7 executes the control flow that includes the hill-hold control.

### (Step S1: Determination related to execution permission of hill-hold control)

On the basis of the on/off signal of the switch 8A, the determination section 7B1 of the control section 7 determines whether the execution of the hill-hold control is permitted.

If it is determined that the execution is permitted, the process proceeds to step S2.

If it is determined that the execution is not permitted, step S1 is repeated.

### (Step S2: Determination related to stop of motorcycle 200)

On the basis of the wheel speed that is computed by the computation section 7B4, the determination section 7B1 of the control section 7 determines whether the motorcycle 200 is stopped.

If it is determined that the motorcycle 200 is stopped, the process proceeds to step S3.

If it is determined that the motorcycle 200 is not stopped, the process returns to step S1.

### (Step S3: Determination related to brake operation section)

On the basis of the detection signal of the position detection sensor SW, the determination section 7B1 of the control section 7 determines whether the brake operation section is released.

If it is determined that the brake operation section is released, the process proceeds to step S4.

If it is determined that the brake operation section is not released, the process returns to step S1.

### (Step S4: Execution of retention mode of hill-hold control)

The control section 7 executes the retention mode of the hill-hold control. The control section 7 closes the switching valve 10 for the certain time such that the brake force of the motorcycle 200 is retained.

### (Step S5: Execution of cancellation mode of hill-hold control)

The control section 7 executes the cancellation mode of the hill-hold control. In addition, the decision section 7B2 of the control section 7 decides the reduction amount α of the brake force per time to the prescribed value α1. Then, the control section 7 controls the switching valve 10 such that the reduction amount α of the brake force per time becomes the prescribed value α1.

### (Step S6: Determination related to initiation of movement of motorcycle 200)

The determination section 7B1 of the control section 7 determines whether the cylinder pressure is higher than the first prescribed pressure, and also determines whether the motorcycle 200 starts moving.

If it is determined that the cylinder pressure is higher than the first prescribed pressure and it is determined that the motorcycle 200 starts moving, the process proceeds to step S7.

If it is determined that the cylinder pressure is higher than the first prescribed pressure and it is determined that the motorcycle 200 does not start moving, the process returns to step S5.

If it is determined that the cylinder pressure is not higher than the first prescribed pressure, the process proceeds to step S9 regardless of the determination related to the initiation of the movement.

### (Step S7: Change in reduction amount α of brake force per time)

The decision section 7B2 of the control section 7 changes the reduction amount α of the brake force per time to the prescribed value α2. Then, the control section 7 controls the switching valve 10 such that the reduction amount α of the brake force per time becomes the prescribed value α2.

### (Step S8: Determination related to prescribed time TM1)

After controlling the switching valve 10 by setting the reduction amount α of the brake force per time to the prescribed value α2 on the basis of the signal from the timer section 7B3, the determination section 7B1 of the control section 7 determines whether the prescribed time TM1 has elapsed.

If it is determined that the prescribed time TM1 has elapsed, the process proceeds to step S9.

If it is determined that the prescribed time TM1 has not elapsed, the process returns to step S7.

### (Step S9: Set back reduction amount α of brake force per time)

The decision section 7B2 of the control section 7 makes a decision to set back the reduction amount α of the brake force per time from the prescribed value α2 to the prescribed value α1. Then, the control section 7 controls the switching valve 10 such that the reduction amount α of the brake force per time becomes the prescribed value α1.

### (Step S10: Determination related to cylinder pressure)

The determination section 7B1 of the control section 7 determines whether the cylinder pressure is lower than the second prescribed pressure.

If it is determined that the cylinder pressure is lower than the second prescribed pressure, the process proceeds to step S11.

If it is determined that the cylinder pressure is not lower than the second prescribed pressure, the process returns to step S9.

### (Step S11: End)

The control section 7 terminates the control flow that includes the hill-hold control.

Note that, in this first embodiment, the description has been made on the case where the determinations, which are described in step S1 to step S3 depicted in Fig. 7, are made prior to shifting to the hill-hold control; however, the invention is not limited thereto. For example, the determination on whether to shift to the hill-hold control may include a determination on whether the motorcycle 200 is in a low gear or the like.

### <Effects that controller 1 according to this first embodiment has>

In the cases where the brake force, which has been retained by the hill-hold control, starts to be reduced and it is then determined on the basis of the detection signal of the detection section WS that the motorcycle 200 starts moving, the control section 7 of the controller 1 according to this first embodiment reduces the reduction amount α of the brake force per time to make it smaller than the reduction amount α of the brake force per time prior to the determination that the motorcycle 200 starts moving. In other words, the controller 1 according to this first embodiment can achieve gentle movement of the motorcycle 200 that starts moving on the inclined road surface.

For example, a normal force from the road surface that acts on the motorcycle 200 is smaller than that acting on the four-wheeled vehicle and the like, and a friction force between the wheel W and the road surface tends to be reduced. Accordingly, compared to the four-wheeled vehicle and the like, the initiation of the movement of the motorcycle 200 from the stopped state on the inclined road surface tends to become unstable. The control section 7 of the controller 1 according to this first embodiment can achieve the gentle movement of the motorcycle 200 that starts moving on the inclined road surface, and thus can suppress the posture of the motorcycle 200 from becoming unstable. Therefore, the controller 1 according to this first embodiment is particularly suited for use in the motorcycle 200.

In addition, differing from the four-wheeled vehicle and the like, the occupant himself/herself needs to secure stability of the posture of the motorcycle 200 by using legs or the like. When the motorcycle 200, which is stopped on an uphill road surface, suddenly starts moving, it becomes difficult to secure the stability of the posture of the motorcycle 200. Therefore, the controller 1 according to this first embodiment is particularly effective for the hill-hold control that is executed on the uphill road surface.

Preferably, in the cases where it is determined that the motorcycle 200 starts moving on the basis of the detection signal of the detection section WS and the brake force is smaller than the prescribed value, the controller 1 according to this first embodiment does not reduce the reduction amount α of the brake force per time. Note that this prescribed value corresponds to the above-described first prescribed pressure (see step S6 in Fig. 7). It is because, when the brake force is smaller than the prescribed value, the movement of the motorcycle 200 cannot be made gentle and it is thus difficult to stabilize the posture of the motorcycle 200. In other words, the controller 1 can avoid unnecessary extension of the time in the cancellation mode.

### <Modified example of first embodiment>

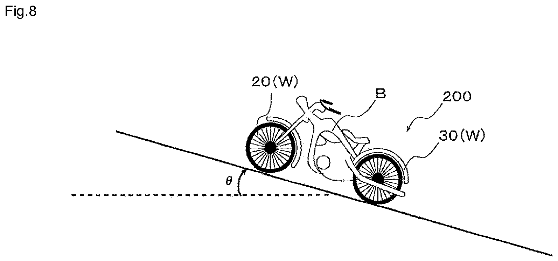

Fig. 8 is a view that schematically depicts the motorcycle that is stopped on the uphill road surface. The prescribed value α2 and the prescribed time TM1, both of which are defined in advance, are used in the first embodiment. In a modified example, an inclination value θ of the road surface is obtained, and the prescribed value α2 and the prescribed time TM1 are changed in accordance with the inclination value θ.

The computation section 7B4 computes the inclination value θ on the basis of the detection signal of the detection section WS as the wheel speed sensor, the signal being obtained immediately before the motorcycle 200 stops. Compared to a case where the inclination value θ is small, deceleration of the wheel speed is promoted in the case where the inclination value θ is large. Accordingly, the computation section 7B4 can compute the inclination value θ from a relationship between the detection signal of the detection section WS as the wheel speed sensor and the detection signal of another detection section (the position detection sensor SW, the pressure sensor 8D, or the like).

When determining that the execution of the hill-hold control is permitted, that the motorcycle 200 is stopped, and that the brake operation section is released, the determination section 7B1 determines to execute the retention mode of the hill-hold control.

The decision section 7B2 computes the prescribed value α2 and the prescribed time TM1 in accordance with the inclination value θ that is computed by the computation section 7B4. For example, compared to the case where the inclination value θ is small, a vehicle body speed of the motorcycle 200 at the time when it is determined that the motorcycle 200 starts moving is possibly high in the case where the inclination value θ is large. Accordingly, in the case where the inclination value θ is large, the decision section 7B2 reduces the prescribed value α2 to make it smaller than that in the case where the inclination value θ is small. In other words, the reduction amount α of the brake force per time is reduced to a greater degree. In addition, in the case where the inclination value θ is large, the prescribed time TM1 is extended to be longer than that in the case where the inclination value θ is small by the decision section 7B2. Note that the decision section 7B2 may decide both of the reduction of the prescribed value α2 and extension of the prescribed time TM1 or may decide either one of them.

### <Control flow example of modified example of first embodiment>

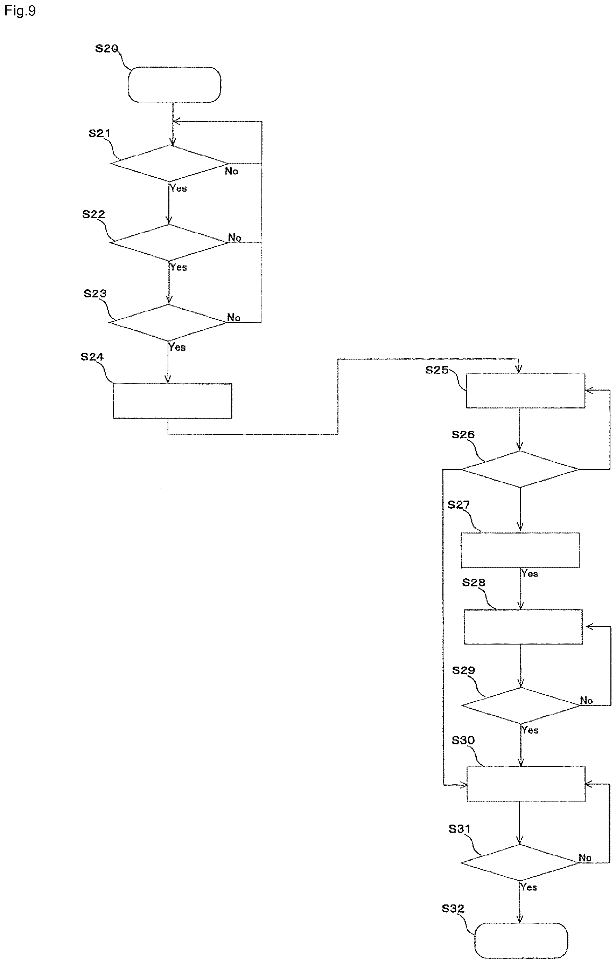

Fig. 9 is one example of a control flow of the controller according to the modified example of this first embodiment. Note that Fig. 9 differs from Fig. 7 in points that step S27 is added and contents of step S28 and step S29 are changed from those of step S7 and step S8. Because step S20 to step S26 and step S30 to step S32 in Fig. 9 are respectively the same as step S0 to step S6 and step S9 to step S11 in Fig. 7, the description thereon will not be made.

### (Step S27: Acquisition of prescribed value α2 and prescribed time TM1)

The decision section 7B2 of the control section 7 obtains the prescribed value α2 and the prescribed time TM1 from the memory section 7C. Prior to step S27, the prescribed value α2 and the prescribed time TM1 are computed by using the inclination value θ, which is computed immediately before the motorcycle 200 is stopped, and are stored in the memory section 7C.

### (Step S28 : Change in reduction amount α of brake force per time)

The decision section 7B2 of the control section 7 changes the reduction amount α of the brake force per time from the prescribed value α1 to the prescribed value α2 that is computed by the computation section 7B4. Then, the control section 7 controls the switching valve 10 such that the reduction amount α of the brake force per time becomes the prescribed value α2.

### (Step S29: Determination related to prescribed time TM1)

After controlling the switching valve 10 by setting the reduction amount α of the brake force per time to the prescribed value α2, the determination section 7B1 of the control section 7 determines whether the prescribed time TM1, which is computed by the computation section 7B4, has elapsed.

If it is determined that the prescribed time TM1 has elapsed, the process proceeds to step S30.

If it is determined that the prescribed time TM1 has not elapsed, the process returns to step S28.

### <Effects that controller 1 according to the modified example of this first embodiment has>

Preferably, in accordance with the inclination value θ of the road surface, the control section 7 decides the time TM, in which the reduction amount α of the brake force per time is reduced to be smaller than the reduction amount α of the brake force per time prior to the determination that the motorcycle 200 starts moving. In other words, the control section 7 decides the prescribed time TM1 in accordance with the inclination value θ.

In addition, preferably, in accordance with the inclination value θ of the road surface, the control section 7 decides a degree of reducing the reduction amount α of the brake force per time to make it smaller than the reduction amount α of the brake force per time prior to the determination that the motorcycle 200 starts moving.

For example, even in the case where the wheel speed (the vehicle body speed) of the motorcycle 200 at the time when it is determined that the motorcycle 200 starts moving is changed in accordance with the inclination value θ of the uphill road surface, the movement of the motorcycle 200 can further reliably be made gentle.

### Second Embodiment

In the following description, a description that overlaps that of the first embodiment will not be made, and only different portions will be described.

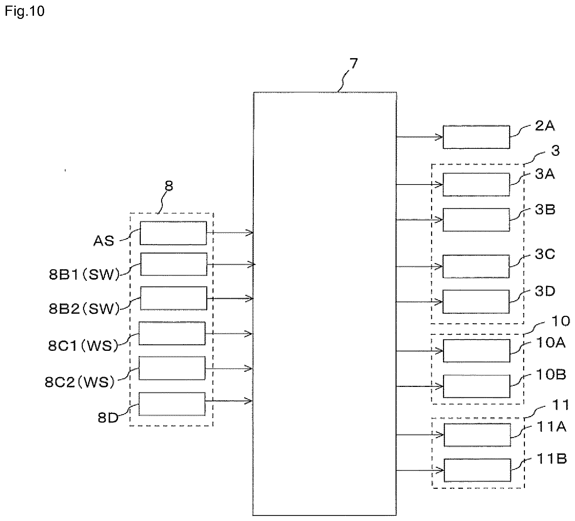

Fig. 10 is a functional block diagram of various sensors, a control section, and various actuators provided in a hydraulic pressure control system that includes a controller according to this second embodiment. A description will be made on the second embodiment with reference to Fig. 10.

In the first embodiment, it is determined whether to execute the hill-hold control by using the on/off signal of the switch 8A. Instead of the above, in the second embodiment, it is determined whether to execute the hill-hold control by using a detection signal of an acceleration sensor (a detection section AS). In other words, instead of the switch 8A, the acceleration sensor is provided in the controller 1.

In addition, in the first embodiment, the initiation of the movement of the motorcycle 200 is determined on the basis of the detection section WS as the wheel speed sensor. Meanwhile, in the second embodiment, the initiation of the movement of the motorcycle 200 is determined on the basis of the detection section AS as the acceleration sensor.

On the basis of the inclination value θ that is computed by the computation section 7B4 from a detection signal of the detection section AS as the acceleration sensor, the determination section 7B1 determines whether the motorcycle 200 is on the inclined road surface. In addition, when determining that the motorcycle 200 is on the inclined road surface, that the motorcycle 200 is stopped, and that the brake operation section is released, the determination section 7B1 determines to execute the retention mode of the hill-hold control. Furthermore, when the cancellation mode is executed, the determination section 7B1 determines on the basis of the detection signal of the detection section AS whether the motorcycle 200 starts moving.

### <Control flow example of second embodiment>

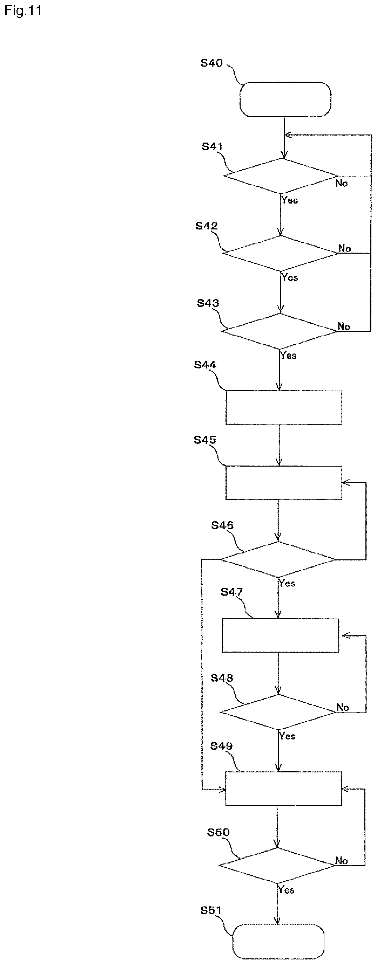

Fig. 11 is one example of a control flow of the controller according to this second embodiment. Fig. 11 differs from Fig. 7 in a point that contents of step S41 and step S46 are changed from those of step S1 and step S6. Because step S40, step S42 to step S45, and step S47 to step S51 in Fig. 11 are respectively the same as step S0, step S2 to step S5, and step S7 to step S11 in Fig. 7, the description thereon will not be made.

### (Step S41: Determination related to inclination)

On the basis of the detection signal of the detection section AS as the acceleration sensor, the determination section 7B1 of the control section 7 determines whether the motorcycle 200 is on the inclined road surface.

If it is determined that the motorcycle 200 is on the inclined road surface, the process proceeds to step S42.

If it is determined that the motorcycle 200 is not on the inclined road surface, step S41 is repeated.

### (Step S46: Determination related to initiation of movement of motorcycle 200 and the like)

The determination section 7B1 of the control section 7 determines whether the cylinder pressure is higher than the first prescribed pressure, and also determines on the basis of the detection signal of the detection section AS whether the motorcycle 200 starts moving.

If it is determined that the cylinder pressure is higher than the first prescribed pressure and it is determined that the motorcycle 200 starts moving, the process proceeds to step S47.

If it is determined that the cylinder pressure is higher than the first prescribed pressure and it is determined that the motorcycle 200 does not start moving, the process returns to step S45.

If it is determined that the cylinder pressure is not higher than the first prescribed pressure, the process proceeds to step S49 regardless of the determination related to the initiation of the movement.

### <Effects that controller 1 according to this second embodiment has>

Preferably, the detection section AS of the controller 1 is the acceleration sensor that detects acceleration acting on the motorcycle 200. In other words, similar effects to those of the controller 1 according to the first embodiment can be obtained by using the acceleration sensor (the detection section AS) instead of the wheel speed sensor.

Note that, in the case where the controller 1 includes the detection section AS, the determination section 7B1 of the control section 7 can determine whether the road surface is inclined even when the occupant does not perform the operation of the switch 8A or the like on the inclined road surface. Thus, a burden on the occupant can be reduced.

### <Modified example of second embodiment>

In the modified example of the first embodiment, it is determined whether to execute the hill-hold control by using the on/off signal of the switch 8A. Instead of the above, in a modified example of the second embodiment, it is determined whether to execute the hill-hold control by using the detection signal of the acceleration sensor (the detection section AS) . In addition, in the modified example of the second embodiment, the initiation of the movement of the motorcycle 200 is determined on the basis of the detection section AS as the acceleration sensor. Furthermore, in the modified example of the second embodiment, the inclination value θ of the road surface is obtained from the detection signal of the detection section AS.

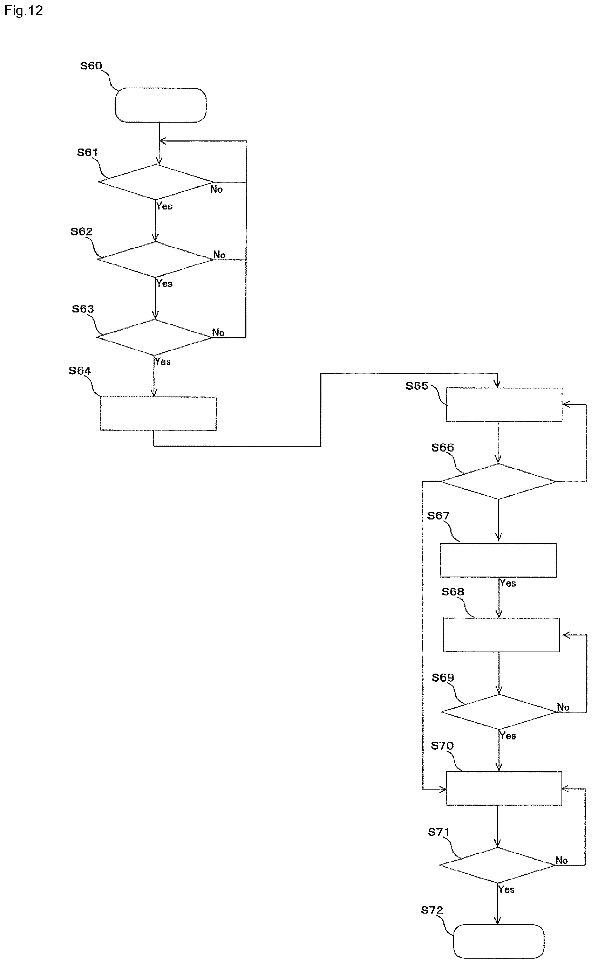

Fig. 12 is one example of a control flow of a controller according to the modified example of this second embodiment. Note that Fig. 12 differs from Fig. 9 in a point that contents of step S61, step S66, and step S67 are changed from those of step S21, step S26, and step S27. Because step S60, step S62 to step S65, and step S68 to step S72 in Fig. 12 are respectively the same as step S20, step S22 to step S25, and step S28 to step S32 in Fig. 9, the description thereon will not be made. In addition, because step S61 and step S66 are respectively the same as step S41 and step S46 in Fig. 11, the description thereon will not be made.

### (Step S67: Acquisition of prescribed value α2 and prescribed time TM1)

The decision section 7B2 of the control section 7 obtains the prescribed value α2 and the prescribed time TM1 from the memory section 7C. Prior to step S67, the prescribed value α2 and the prescribed time TM1 are computed by using the inclination value θ, which is computed by using the detection signal of the acceleration sensor (the detection section AS), and are stored in the memory section 7C. As the inclination value θ, the inclination value θ that is used for the determination in step S61 is preferably used.

### <Effects that controller 1 according to modified example of this second embodiment has>

Similar effects to the effects obtained by the modified example of the first embodiment and the effects that the controller 1 according to the second embodiment has can be obtained.

Note that the brake force of either one of the front wheel 20 and the rear wheel 30 may be retained, or the brake forces of both of the front wheel 20 and the rear wheel 30 may be retained in the retention mode of the hill-hold control in each of the first embodiment, the modified example thereof, the second embodiment, and the modified example thereof. Whether to select either one of the front wheel 20 and the rear wheel 30 or both of the front wheel 20 and the rear wheel 30 may be switched in accordance with the inclination value θ that is obtained by the control section 7, for example.

The description has been made so far on the first embodiment, the modified example thereof, the second embodiment, and the modified example thereof. However, the invention is not limited to the description of each of these. For example, a whole or a part of each of the embodiments and each of the modified examples may be combined.

### Reference Signs List

- 1:: Controller
- 2:: Pump device
- 2A:: Drive mechanism
- 2B:: Pump element
- 3:: Regulating valve
- 3A:: First pressure boosting valve
- 3B:: First pressure reducing valve
- 3C:: Second pressure boosting valve
- 3D:: Second pressure reducing valve
- 4:: Internal channel
- 4A:: Internal channel
- 4B:: Internal channel
- 5:: Float restrictor
- 6:: Accumulator
- 7:: Control section
- 7A:: Input section
- 7B:: Processor section
- 7B1:: Determination section
- 7B2:: Decision section
- 7B3:: Timer section
- 7B4:: Computation section
- 7B5:: Drive mechanism control section
- 7B6:: Valve control section
- 7C:: Memory section
- 8:: Detection mechanism
- 8A:: Switch
- 8B1:: Position detection sensor
- 8B2:: Position detection sensor
- 8C1:: Detection section
- 8C2:: Detection section
- 8D:: Pressure sensor
- 10:: Switching valve
- 10A:: Switching valve
- 10B:: Switching valve
- 11:: Inlet valve
- 11A:: Inlet valve
- 11B:: Inlet valve
- 20:: Front wheel
- 21:: Front brake pad
- 22:: Front wheel cylinder
- 23:: Brake fluid pipe
- 24:: Handlebar lever
- 25:: First master cylinder
- 26:: First reservoir
- 27:: Brake fluid pipe
- 30:: Rear wheel
- 31:: Rear brake pad
- 32:: Rear wheel cylinder
- 33:: Brake fluid pipe
- 34:: Foot pedal
- 35:: Second master cylinder
- 36:: Second reservoir
- 37:: Brake fluid pipe
- 100:: Hydraulic pressure control system
- 200:: Motorcycle
- AS:: Detection section
- B:: Vehicle body
- C1:: Front-wheel hydraulic circuit
- C2:: Rear-wheel hydraulic circuit
- P:: Port
- SW:: Position detection sensor
- T1:: Arithmetic section
- T2:: Actuator control section
- W:: Wheel
- WS:: Detection section
- α:: Reduction amount per time
- α1:: Prescribed value
- α2:: Prescribed value
- θ:: Inclination value

## Claims

1. A controller (1) for controlling a brake mechanism that generates a brake force on a motorcycle (200), the controller comprising:
a detection section (8C1, 8C2) for detecting movement of the motorcycle; and
a control section (7) for executing hill-hold control that retains the brake force on an inclined road surface, **characterized in that**,
in the cases where the brake force, which has been retained by the hill-hold control, starts to be reduced and it is then determined on the basis of a detection signal of the detection section that the motorcycle starts moving on,
the control section (7) reduces a reduction amount of the brake force per time to make it smaller than the reduction amount of the brake force per time prior to the determination (7B1) that the motorcycle (200) starts moving.

2. The controller according to claim 1, wherein
in the cases where it is determined on the basis of the detection signal of the detection section that the motorcycle starts moving and the brake force is smaller than a prescribed value, the control section does not reduce the reduction amount of the brake force per time.

3. The controller according to claim 1 or 2, wherein
the control section decides a time required for reducing the reduction amount of the brake force per time to make it smaller than the reduction amount of the brake force per time prior to the determination that the motorcycle starts moving in accordance with an inclination value of the road surface.

4. The controller according to any one of claims 1 to 3, wherein
the control section decides a degree of reducing the reduction amount of the brake force per time to make it smaller than the reduction amount of the brake force per time prior to the determination that the motorcycle starts moving in accordance with the inclination value of the road surface.

5. The controller according to claim 3 or 4, wherein
the control section obtains the inclination value of the road surface on the basis of a speed of a wheel of the motorcycle.

6. The controller according to any one of claims 3 to 5, wherein
the control section obtains the inclination value of the road surface on the basis of acceleration that acts on the motorcycle.

7. The controller according to any one of claims 1 to 6, wherein
the detection section is a wheel speed sensor for detecting the speed of the wheel of the motorcycle.

8. The controller according to any one of claims 1 to 6, wherein
the detection section is an acceleration sensor for detecting the acceleration that acts on the motorcycle.

9. A control method of a motorcycle (200) for executing hill-hold control that retains a brake force of a brake mechanism on an inclined road surface, the control method comprising the steps of:
starting to reduce the brake force, which has been retained by the hill-hold control (55);
determining whether the motorcycle starts moving (56) after the brake force starts to be reduced; and **characterized in that**
in the case where it is determined that the motorcycle starts moving, reducing a reduction amount (57) of the brake force per time to make it smaller (α2)
than the reduction amount of the brake force per time prior to the determination that the motorcycle starts moving (α1).

## Patentansprüche

1. Steuergerät (1) zum Steuern eines Bremsmechanismus, welcher eine Bremskraft an einem Motorrad (200) erzeugt,
wobei das Steuergerät aufweist:
einen Erfassungsabschnitt (8C1, 8C2) zum Erfassen einer Bewegung des Motorrads; und
einen Steuerabschnitt (7) zum Ausführen von Berghaltesteuerung, welche die Bremskraft auf einer geneigten Fahrbahn beibehält,
**dadurch gekennzeichnet, dass**
in den Fällen, in denen die Bremskraft, welche durch die Berghaltesteuerung beibehalten worden ist, beginnt, sich abzubauen, und es dann auf der Grundlage eines Erfassungssignals des Erfassungsabschnitts ermittelt wird, dass das Motorrad sich weiter zu bewegen beginnt, der Steuerabschnitt (7) einen Verringerungsbetrag der Bremskraft pro Zeit verringert, um ihn kleiner zu machen als den Verringerungsbetrag der Bremskraft pro Zeit vor der Ermittlung (7B1), dass das Motorrad (200) sich zu bewegen beginnt.

2. Steuergerät nach Anspruch 1, wobei
in den Fällen, in denen auf der Grundlage des Erfassungssignals des Erfassungsabschnitts ermittelt wird, dass das Motorrad sich zu bewegen beginnt, und die Bremskraft kleiner als ein vorgeschriebener Wert ist, der Steuerabschnitt den Verringerungsbetrag der Bremskraft pro Zeit nicht verringert.

3. Steuergerät nach Anspruch 1 oder 2, wobei
der Steuerabschnitt eine Zeit beschließt, welche erforderlich ist, um den Verringerungsbetrag der Bremskraft pro Zeit zu verringern, um ihn kleiner zu machen als den Verringerungsbetrag der Bremskraft pro Zeit vor der Ermittlung, dass das Motorrad in Übereinstimmung mit einem Neigungswert der Fahrbahn sich zu bewegen beginnt.

4. Steuergerät nach einem der Ansprüche 1 bis 3, wobei
der Steuerabschnitt ein Ausmaß zur Verringerung des Verringerungsbetrags der Bremskraft pro Zeit beschließt, um ihn kleiner zu machen als den Verringerungsbetrag der Bremskraft pro Zeit vor der Ermittlung, dass das Motorrad in Übereinstimmung mit einem Neigungswert der Fahrbahn sich zu bewegen beginnt.

5. Steuergerät nach Anspruch 3 oder 4, wobei
der Steuerabschnitt den Neigungswert der Fahrbahn auf der Grundlage einer Geschwindigkeit eines Rads des Motorrads bezieht.

6. Steuergerät nach einem der Ansprüche 3 bis 5, wobei
der Steuerabschnitt den Neigungswert der Fahrbahn auf der Grundlage einer Beschleunigung, welche auf das Motorrad einwirkt, bezieht.

7. Steuergerät nach einem der Ansprüche 1 bis 6, wobei
der Erfassungsabschnitt ein Raddrehzahlsensor zum Erfassen der Drehzahl des Rads des Motorrads ist.

8. Steuergerät nach einem der Ansprüche 1 bis 6, wobei
der Erfassungsabschnitt ein Beschleunigungssensor zum Erfassen der Beschleunigung, welche auf das Motorrad einwirkt, ist.

9. Steuerungsverfahren eines Motorrads (200) zum Ausführen von Berghaltesteuerung, welche die Bremskraft eines Bremsmechanismus auf einer geneigten Fahrbahn beibehält, wobei das Steuerungsverfahren die Schritte aufweist:
Beginnen, um die Bremskraft, welche durch die Berghaltesteuerung (55) beibehalten worden ist, zu verringern;
Ermitteln, ob sich das Motorrad bewegt (56), nachdem die die Bremskraft begonnen hat, sich abzubauen; und
**Gekennzeichnet durch**
in dem Fall, in dem ermittelt wird, dass sich das Motorrad zu bewegen beginnt, Verringern eines Verringerungsbetrags (57) der Bremskraft pro Zeit, um ihn kleiner zu machen (α2) als den Verringerungsbetrag der Bremskraft pro Zeit vor der Ermittlung, dass sich das Motorrad bewegt (α1).

## Revendications

1. Dispositif de commande (1) pour commander un mécanisme de freinage qui génère une force de freinage sur un motocycle (200),
le dispositif de commande comprenant :
une section de détection (8C1, 8C2) pour détecter un déplacement du motocycle ; et
une section de commande (7) pour exécuter une commande d'aide au démarrage en côte qui retient la force de freinage sur une surface de route inclinée,
**caractérisé en ce que**,
dans les cas où la force de freinage, qui a été retenue par la commande d'aide au démarrage en côte, commence à être réduite et où il est déterminé ensuite, d'après un signal de détection de la section de détection, que le motocycle commence à se déplacer, la section de commande (7) réduit une quantité de réduction de la force de freinage par unité de temps pour la rendre plus petite que la quantité de réduction de la force de freinage par unité de temps avant la détermination (7B1) selon laquelle le motocycle (200) commence à se déplacer.

2. Dispositif de commande selon la revendication 1, dans lequel
dans les cas où il est déterminé, d'après le signal de détection de la section de détection, que le motocycle commence à se déplacer et que la force de freinage est plus petite qu'une valeur prescrite, la section de commande ne réduit pas la quantité de réduction de la force de freinage par unité de temps.

3. Dispositif de commande selon la revendication 1 ou 2, dans lequel
la section de commande décide d'un temps nécessaire pour réduire la quantité de réduction de la force de freinage par unité de temps pour la rendre plus petite que la quantité de réduction de la force de freinage par unité de temps avant la détermination selon laquelle le motocycle commence à se déplacer en conformité avec une valeur d'inclinaison de la surface de route.

4. Dispositif de commande selon l'une quelconque des revendications 1 à 3, dans lequel
la section de commande décide d'un degré de réduction de la quantité de réduction de la force de freinage par unité de temps pour la rendre plus petite que la quantité de réduction de la force de freinage par unité de temps avant la détermination selon laquelle le motocycle commence à se déplacer en conformité avec la valeur d'inclinaison de la surface de route.

5. Dispositif de commande selon la revendication 3 ou 4, dans lequel
la section de commande obtient la valeur d'inclinaison de la surface de route d'après une vitesse d'une roue du motocycle.

6. Dispositif de commande selon l'une quelconque des revendications 3 à 5, dans lequel
la section de commande obtient la valeur d'inclinaison de la surface de route d'après l'accélération qui agit sur le motocycle.

7. Dispositif de commande selon l'une quelconque des revendications 1 à 6, dans lequel
la section de détection est un capteur de vitesse de roue pour détecter la vitesse de la roue du motocycle.

8. Dispositif de commande selon l'une quelconque des revendications 1 à 6, dans lequel
la section de détection est un capteur d'accélération pour détecter l'accélération qui agit sur le motocycle.

9. Procédé de commande d'un motocycle (200) pour exécuter une commande d'aide au démarrage en côte qui retient une force de freinage d'un mécanisme de freinage sur une surface de route inclinée, le procédé de commande comprenant les étapes de :
démarrage pour réduire la force de freinage, qui a été retenue par la commande d'aide au démarrage en côte (55) ;
détermination quant à savoir si le motocycle commence à se déplacer (56) après que la force de freinage commence à être réduite ; et **caractérisé par**
dans le cas où il est déterminé que le motocycle commence à se déplacer, réduction d'une quantité de réduction (57) de la force de freinage par unité de temps pour la rendre plus petite (α2) que la quantité de réduction de la force de freinage par unité de temps avant la détermination selon laquelle le motocycle commence à se déplacer (α1).
